# FASCICULE DE BREVET EUROPEEN

(11) **EP 2 164 742 B1**
(45) Date de publication et mention de la délivrance du brevet: **23.09.2015**
(21) Numéro de dépôt: 08748212.1
(22) Date de dépôt: 28.04.2008
(51) Int. Cl.: B61H 9/06, B60L 7/10, F16D 61/00, B61C 17/06, B61C 3/02, B60T 1/10

(54) **SYSTEME QUASI-AUTONOME DE STOCKAGE D'ENERGIE ET DE MOTORISATION ELECTRIQUE**
QUASI AUTONOMES ENERGIESPEICHER- UND ENERGIEVERSORGUNGSSYSTEM
QUASI SELF-CONTAINED ENERGY STORAGE AND POWER SUPPLY SYSTEM

(30) Priorité: 07.05.2007 CA 2588165
(43) Date de publication de la demande: 24.03.2010
(73) Titulaire: SERISE TECHNOLOGIES INC., Montréal QC H3W 2C9 (CA)
(72) Inventeur: MAI, Serge, Montréal, Québec H3W 2M6 (CA)
(74) Mandataire: Decobert, Jean-Pascal
(86) Numéro de dépôt international: PCT/CA2008/000810
(87) Numéro de publication internationale: WO 2008/134860

(56) Documents cités:
- WO-A1-2004/026657
- WO-A1-2004/026657
- JP-A- 11 098 605
- JP-A- 58 021 055
- US-A- 2 589 453
- US-A1- 2002 174 797
- US-A1- 2002 174 797
- US-B2- 6 973 880
- US-B2- 6 973 880

## Description

### DOMAINE GENERAL DE L'INVENTION

La présente invention est relative à un système quasi-autonome de stockage d'énergie et de motorisation électrique et à tout ensemble notamment convois et trains comportant au moins un tel système.

La présente invention a notamment pour objet un module de traction auxiliaire et son installation de façon indépendante sur chaque bogie d'un train sans changement notable, ou sans aucun changement, dans le mode de conduite de la locomotive.

Un autre objet de la présente invention est relatif aux bogies équipés du système de l'invention ainsi qu'aux wagons comportant au moins un de ces bogies.

Les trains comportant au moins un wagon selon l'invention constituent également un objet de l'invention.

Un autre objet de la présente invention est relatif à l'utilisation dudit système dans tout ensemble notamment convoi, train, bogie ou essieu et en particulier à l'utilisation sur les essieux porteurs d'équipements routiers

Les systèmes de la présente invention qui permettent de récupérer une partie de l'énergie générée lors du freinage sont faciles à installer et permettent notamment de réduire substantiellement la quantité d'énergie consommée par la locomotive.

### ETAT DE LA TECHNIQUE

D'une part, les équipements développés pour les voitures hybrides ou tout-électriques sont maintenant suffisamment au point et performants : en termes de fiabilité, de puissance et d'endurance. Des systèmes fournissant 50 CV et plus sont disponibles, avec une capacité de freinage régénératif. Les batteries accompagnant la motorisation offrent une bonne densité de puissance et acceptent de très nombreux cycles. L'ensemble de l'équipement de fourniture d'énergie et de motorisation présente un encombrement réduit dimensionné pour les véhicules de tourisme. Plusieurs constructeurs automobiles, traditionnels ou spécialisés, proposent des automobiles de tourisme hybrides ou tout électriques : Toyota Prius, Chevrolet Chevy Volt, Heuliez-Dassault Cleanova, Renault Kangoo Electrique, etc.

D'autre part, les trains traditionnels (passagers ou transport de marchandises) sont constitués d'une locomotive fournissant la puissance de traction et d'un convoi de voitures tractées. D'un point de vue de la répartition des efforts de traction cette configuration n'est pas optimale puisque ceux-ci sont concentrés dans la locomotive, avec les problèmes d'adhérence et de densité de puissance qui sont liés.

Il est maintenant reconnu que les trains sont motorisés de façon optimale par un système de traction réparti sur l'ensemble de la rame plutôt que par un effort de traction localisé sur une ou deux locomotives.

Par exemple, l'article « Automotrices et trains remorqués par des locomotives » de la base de données techniques de Union Internationale des Chemins de Fer comprend la conclusion suivante (extrait traduit) : « Les automotrices à traction répartie sont généralement considérées comme étant la meilleure solution pour les déplacements urbains et régionaux, ainsi que plus récemment pour les trains à grande vitesse. Même si l'économie d'énergie n'est évidemment pas le motif principal d'introduction des voitures automotrices, le critère d'efficacité énergétique joue clairement en faveur des concepts à traction répartie.»

De plus, dans les trains traditionnels, le freinage des voitures n'est que pneumatique ce qui induit une faible capacité de récupération de l'énergie de freinage et la nécessité de remplacer fréquemment les patins de freinage.

Enfin, il est connu qu'un véhicule possédant une capacité à récupérer tout ou partie de son énergie cinétique lors d'un freinage, à la stocker et à la réutiliser lors des phases d'accélération sera plus économe en carburant et réduira son impact environnemental.

Des brevets décrivent des véhicules électriques, des véhicules hybrides et leurs composants constitutifs. D'autres brevets traitent de remorques et bogies motorisés.

La demande de brevet CA 2430157 présente les configurations et différents modes de fonctionnement d'un véhicule électrique équipé d'une génératrice à combustion interne, d'un générateur/moteur électrique, d'une batterie, d'un moteur électrique et d'un embrayage mécanique permettant de coupler le générateur au moteur à combustion interne pour recharger la batterie ou bien au moteur électrique pour augmenter l'effort de traction produit.

La demande de brevet US 10/093,717 montre un système similaire adapté à un scooter, comprenant une source génératrice de puissance alimentée par un réservoir de carburant, un convertisseur de puissance, une batterie, un autre convertisseur de puissance et son moteur électrique, et un contrôleur recevant ses commandes de la poignée d'accélération et de freinage du scooter. L'invention décrit les différents modes de fonctionnement et les flux de puissance du système électrique selon les modes de freinage ou d'accélération sélectionnés par le conducteur du scooter.

La demande de brevet WO/1991/012160 décrit un véhicule tracteur et sa remorque et présente le moyen de moduler l'effort de freinage de la remorque en fonction de la contrainte mécanique mesurée dans la barre de traction liant le tracteur à sa remorque. L'objet de l'invention est la modulation de la pression dans la conduite de freinage contrôlant les freins de la remorque de manière à réduire l'effort dans la barre de traction et équilibrer les forces de freinage du tracteur et de sa remorque. Dans cette invention le concept d'utilisation d'une mesure d'effort mécanique pour évaluer la freinage est posé, mais la modulation de l'effort de freinage de la remorque est commandée par la pression du fluide transmis à la remorque et non pas de façon autonome dans la remorque elle-même. D'autre part l'énergie de freinage n'est pas récupérée par génération.

Le brevet WO/1996/029224 présente un véhicule électrique ferroviaire dans lequel au moins une des roues du bogie est reliée mécaniquement à un moteur électrique par une transmission mécanique. Ce document décrit l'installation des composants dans le bogie et la méthode utilisée pour assurer une bonne transmission de l'effort mécanique, un volume réduit respectant les gabarits ferroviaires et une position intéressante du centre de gravité de l'ensemble.

La demande de brevet WO/2000/074964 propose l'utilisation d'une remorque rattachée à un véhicule tracteur électrique, ladite remorque portant un système de génération d'énergie électrique constitué d'un réservoir de carburant, d'un moteur thermique, d'un générateur et d'un convertisseur. L'énergie électrique produite dans la remorque est transférée au véhicule tracteur par une liaison électrique pour charger la batterie et alimenter le moteur de traction électrique dudit véhicule tracteur.

La demande de brevet WO/2003/022665 décrit une benne remorque utilisée dans un train routier notamment pour transporter du minerai. Ladite remorque est motorisée et possède sa propre source d'énergie, son propre système de refroidissement et de traction, et son effort de traction est synchronisé par divers moyens à l'effort de traction de la voiture de tête du train routier (double-pédale, levier, effort proportionnel).

La demande de brevet WO/2003/045755 présente un système similaire à la demande WO/1991/012160 discutée plus haut, mais incorporant directement un système électrique de freinage à tambour ou disque, contrôlé par la mesure de l'effort de retenue auquel est soumise la barre de traction liant la remorque au véhicule principal. Comme dans la demande WO/1991/012160 les roues de la remorque sont passives et ne peuvent ni produire un effort de traction ni régénérer l'énergie de freinage.

La demande de brevet GB 2425290A propose un bogie comportant un châssis, équipé d'un moteur thermique ou électrique, d'un volant d'inertie et son boîtier, un réducteur d'engrenage, des boîtes de transmission, des convertisseurs hydrostatiques et des arbres de transmission couplés aux essieux. Le système emmagasine de l'énergie dans le volant d'inertie accélérée par le moteur ou par le freinage des roues, et transmet de l'énergie du volant d'inertie vers les roues pour accélérer le bogie. Le système peut être équipé d'un contrôleur qui prescrit la vitesse de l'essieu en fonction d'une vitesse désirée demandée par un système externe.

Enfin, dans la demande WO/2007/070988 on propose l'utilisation d'une remorque intermédiaire motorisée pouvant être insérée dans un train routier. De manière analogue à ce qui est proposé dans la demande WO/2003/022665, l'effort de traction fourni par la remorque intermédiaire est synchronisé à l'effort de traction de la voiture de tête, par un système de communication éventuellement sans-fil.

Les descriptions mentionnées ci-dessus montrent l'état de la technique concernant l'utilisation de l'énergie électrique fournie par un moteur thermique ou une génératrice externe, pour des systèmes de traction, incluant l'utilisation de système de stockage d'énergie et la récupération de l'énergie de freinage dynamique, selon un mode de fonctionnement défini par un conducteur ou par un contrôle externe. Ce mode de fonctionnement cherche à optimiser la consommation d'énergie et à réduire la consommation totale de carburant mais nécessite des instructions venant d'un conducteur ou d'un contrôleur externe pour sélectionner les modes de traction ou de freinage.

Le document US 6 973 880 - B2 divulgue un système de récupération d'énergie électrique pour véhicule hybride. Il comporte une source d'énergie primaire et un processeur de gestion d'énergie qui reçoit des commandes du pilote du véhicule ou d'un autre véhicule auquel il est couplé.

On décrit également les moyens d'équilibrer automatiquement l'effort de freinage d'un convoi par détection de paramètres mécaniques sur le véhicule tracteur ou sa remorque. Ce mode de fonctionnement a pour finalité de répartir les efforts de freinage le long d'un convoi mais ne permet pas une récupération de l'énergie de freinage pour utilisation ultérieure.

On présente aussi des moyens devant permettre de répartir et d'augmenter les efforts de traction dans un convoi par ajout de remorques motorisées portant leur propre source d'énergie non-renouvelable, cet effort de traction étant contrôlé directement par la voiture de tête. Ce mode de fonctionnement qui vise à répartir les efforts de traction le long d'un convoi nécessite de posséder une source d'énergie propre à chaque remorque motorisée.

Il existait plus particulièrement un besoin pour un système pouvant être installé sur un véhicule tracté dépourvu d'au moins un des inconvénients des systèmes de l'art antérieur.

Il existait donc un besoin pour un système pouvant être installé sur un véhicule tracté permettant une réduction de la consommation d'énergie par récupération de l'énergie de freinage, une répartition des efforts de traction et de freinage le long du convoi, sans besoin de source d'énergie propre ni de connexion de puissance ou de contrôle externe.

Il existait également un besoin pour un véhicule tracté ayant une capacité de traction et de freinage, sans intervention externe, basée sur la gestion de son énergie propre, et permettant de réduire les efforts fournis par le véhicule tracteur pour faire accélérer ou ralentir ledit véhicule tracté.

Il existait aussi un besoin pour un système autonome, sans source d'énergie propre, pouvant être installé sur une remorque ou un bogie porteur, possédant les caractéristiques de puissance d'un véhicule électrique avec une batterie, un convertisseur, un moteur électrique et particulièrement un contrôleur capable de déterminer indépendamment de tout contrôle externe le mode de fonctionnement en traction, freinage ou erre.

### BRÈVE DESCRIPTION DES FIGURES

- La Figure 1 :: représente le diagramme d'un système quasi-autonome de stockage d'énergie et de motorisation électrique installé sur un bogie selon un mode de réalisation préférentiel de l'invention.
- La Figure 2 :: représente un bogie porteur ferroviaire typique non équipé de l'invention.
- La Figure 3 :: représente un exemple d'installation proposée des composants de l'invention sur un bogie, vue de face.
- La Figure 4 :: représente un exemple d'installation proposée des composants de l'invention sur un bogie, vue de dessus correspondant à la vue de face de la Figure 3.
- La Figure 5 :: représente un exemple d'application de l'invention sur un train traditionnel modifié
- Les Figure 6 à 9:: représentent les diagrammes d'énergies et de vitesse d'un train conventionnel et d'un train équipé de l'invention, le long d'un profil de voie.
- Les Figures 10 à 13 :: représentent un autre exemple de diagrammes d'énergies et de vitesse d'un train conventionnel et d'un train équipé de l'invention, le long d'un profil de voie.

### DESCRIPTION GÉNÉRALE DE L'INVENTION

### Définitions préliminaires

Bogie (ou boggie) est un chariot situé sous un véhicule ferroviaire, sur lequel sont fixés les essieux (et donc les roues). Il est mobile par rapport au châssis du véhicule (locomotive, wagon ou voiture) et destiné à s'orienter convenablement dans les courbes.

Quasi-autonome : qualifie un système dont la source énergétique n'est alimentée que par l'énergie générée par le système lui-même lorsqu'il est mis en mouvement. Avantageusement un tel système à la capacité de se mouvoir sans apport d'une force motrice externe ou avec une force motrice externe limitée et inférieure à la force qui serait nécessaire pour déplacer le système s'il n'était pas quasi-autonome.

Stockage d'énergie : système permettant de recevoir de l'énergie, de l'accumuler pendant un temps non nul et de la restituer à la demande sous forme électrique, en limitant au maximum les déperditions d'énergie au cours du temps. Le stockage d'énergie peut être fait de façon mécanique (ex : volant d'inertie, ressort), électrique (ex : supercondensateur), pneumatique (ex : réservoir d'air comprimé), électrochimique (ex : batteries) ou hydraulique (ex : réservoir de liquide sous pression)

Convertisseur électrique : système de conversion de l'énergie électrique fournie/absorbée par le stockage d'énergie, en tension et courant adaptés pour l'alimentation/la récupération de l'énergie du groupe moteur/générateur. On qualifie généralement ce convertisseur de « quatre-quadrants » car il permet d'absorber ou de fournir de l'énergie tant pour les vitesses positives que négatives du moteur/générateur.

Selon la forme continue (DC) ou alternative (AC) de l'énergie électrique du stockage d'énergie et du groupe moteur/alternateur, ce convertisseur est un hacheur (DC/DC), un onduleur ou redresseur (DC/AC), ou un onduleur bifréquence (AC/AC).

Groupe moteur/générateur : machine tournante électrique transformant l'énergie électrique en énergie mécanique et inversement. Ce moteur/générateur est constitué d'un stator et d'un rotor. Il peut fonctionner en tension et courant continus (DC) ou alternatifs (AC), en mode synchrone ou asynchrone. Il inclut un système de couplage mécanique à l'arbre ou l'essieu auquel il transmet l'énergie mécanique.

Capteur vitesse : système émettant un signal électrique digital ou analogique fournissant la mesure de l'amplitude et le signe de la vitesse de rotation des roues, ou de l'essieu, ou du rotor du moteur/générateur. Le fonctionnement de ce capteur utilise des phénomènes magnétiques, optiques ou encore mécaniques.

Alternativement, le capteur vitesse peut fournir l'information sur la vitesse linéaire de l'ensemble sur lequel il est fixé par rapport au sol, par radar Doppler, calcul de vitesse à l'aide d'un GPS, etc.

Inclinomètre : système émettant un signal électrique digital ou analogique fournissant la mesure de l'amplitude et le signe de l'angle d'inclinaison par rapport au plan horizontal du support sur lequel il est fixé. Le fonctionnement de ce capteur utilise des phénomènes mécaniques et/ou électriques (par exemple un peigne capacitif se déformant en fonction de l'action de la gravité) Accéléromètre : système émettant un signal électrique digital ou analogique fournissant la mesure de l'amplitude et le signe de l'accélération du support sur lequel il est fixé dans une direction prédéfinie. Il est par exemple utilisé pour les accélérations longitudinales, latérales et verticales. Le fonctionnement de ce capteur utilise des phénomènes mécaniques et/ou électriques et/ou optiques et/ou magnétique: piézoélectrique, piézorésistif, optique, effet Hall, etc.

Contrôleur : système de calcul électronique, incluant éventuellement de l'informatique, qui établit les commandes et fournit les signaux de contrôle aux différents composants du système en fonction des informations reçues des divers capteurs et interfaces.

On utilise généralement un microprocesseur ou un microcontrôleur associé à des cartes d'adaptation électroniques des signaux d'entrée/sortie.

Capteur de pression : système émettant un signal électrique digital ou analogique fournissant la mesure de l'amplitude et le signe de la pression d'un fluide (par exemple de l'air) dans un contenant ou un conduit. Le fonctionnement de ce capteur utilise des phénomènes mécaniques et/ou électriques : piézoélectrique, capacitif, etc. Le capteur de pression pourra par exemple être employé pour détecter une variation de pression dans une conduite pneumatique comme celles utilisées pour les systèmes de freinage ferroviaires.

Capteur mécanique : système émettant un signal électrique digital ou analogique fournissant la mesure de la direction, de l'amplitude et du signe du déplacement d'une pièce du capteur par rapport à une autre. Le fonctionnement de ce capteur utilise des phénomènes mécaniques et/ou électriques : piézoélectrique, capacitif, etc. Le capteur mécanique pourra par exemple être employé pour détecter un déplacement d'un levier mécanique de freinage comme ceux utilisés pour les systèmes de freinage ferroviaires.

Interface connexion : système permettant la connexion du contrôleur de l'invention à un dispositif électronique externe, afin de récolter des informations enregistrées par le contrôleur, de mettre à jour les programmes et paramètres, et de commander certains fonctionnements spéciaux de l'invention.

Véhicule pilote : véhicule, motorisé ou non motorisé, capable de transmettre des commandes d'opération vers, et de recueillir des informations depuis un autre véhicule ou un convoi auquel le véhicule pilote est relié. Une locomotive est un exemple de véhicule pilote motorisé. Une voiture cabine sans moteur placée en tête de convoi est un exemple de véhicule pilote non motorisé.

### Définition de l'invention

La présente invention concerne notamment l'utilisation des technologies et produits développés pour les véhicules électriques et hybrides dans un nouveau système permettant d'ajouter une capacité de traction quasi-autonome à des équipements roulants passifs (remorques, bogies porteurs, essieux porteurs, etc.), dont la commande est assurée par des capteurs et contrôleurs intégrés dans ce même système.

**Un premier objet** de l'invention est constitué par les systèmes quasi-autonomes de stockage d'énergie et de motorisation électrique selon la revendication 1.

De préférence, les systèmes quasi-autonomes de stockage d'énergie et de motorisation électrique selon l'invention comportent additionnellement au moins un capteur de vitesse et au moins un arbre tournant de l'essieu ou du bogie, ce capteur de vitesse est alors positionné de préférence le long de l'arbre tournant de l'essieu ou du bogie, et il permet d'identifier la direction et le mode de déplacement de l'essieu ou du bogie sur lequel le système est installé; l'information de vitesse ainsi captée est alors de préférence utilisée par le ou les contrôleur(s) pour optimiser le transfert d'énergie entre le ou les stockages d'énergie et le ou les groupe(s) moteurs(s)/générateur(s), lors d'au moins une des opérations de traction, freinage et erre à laquelle ou auxquelles le dit système est soumis.

Avantageusement, les systèmes quasi-autonomes de stockage d'énergie et de motorisation électrique selon l'invention comportent additionnellement au moins un capteur de pression et des modules pneumatiques de l'essieu ou du bogie et/ou un capteur mécanique et des modules mécaniques de l'essieu ou du bogie, ce capteur de pression est alors positionné de préférence sur les modules pneumatiques de l'essieu ou du bogie et/ou ce capteur mécanique étant relié de préférence aux modules mécaniques de l'essieu ou du bogie, et permettent de détecter le fonctionnement en mode freinage de l'essieu ou du bogie sur lequel le système est installé; l'information de mode de freinage ainsi captée est alors préférentiellement utilisée par le ou les contrôleur(s) pour optimiser le transfert d'énergie lors d'au moins une des opérations de traction, freinage et erre à laquelle ou auxquelles les systèmes sont soumis.

Les systèmes quasi-autonomes de stockage, d'énergie et de motorisation électrique comportent de préférence additionnellement au moins une interface de connexion qui est de préférence électrique ou/et électromagnétique ou/et optique, positionnée de préférence sur le ou les contrôleur(s), et cette interface permet la connexion et/ou la communication du ou des contrôleur(s) du système avec au moins un dispositif électrique ou/et électronique ou/et optique externe audit système.

Avantageusement, les systèmes quasi-autonomes de stockage d'énergie et de motorisation électrique selon l'invention comportent additionnellement au moins un module de connexion à un équipement externe, positionné(s) de préférence sur le module de stockage d'énergie, et ils permettent le transfert d'énergie bidirectionnel entre un ou plusieurs équipements externe(s) au système et le ou les module(s) de stockage d'énergie dudit système.

De préférence, les systèmes quasi-autonomes de stockage d'énergie et de motorisation électrique selon l'invention comportent additionnellement une résistance électrique, positionnée(s) avantageusement sur le module de stockage d'énergie et/ou le convertisseur électrique, et ils permettent la dissipation de l'énergie éventuellement excédentaire à la capacité de stockage du ou des module(s) de stockage d'énergie dudit système.

Parmi les systèmes quasi-autonomes de stockage d'énergie et de motorisation électrique selon l'invention, ceux qui ont la capacité de déterminer automatiquement le mode de motorisation exigé par le mouvement du convoi : traction, freinage ou erre, et ce en se basant sur leurs propres capteurs, présentent un intérêt tout particulier.

Les systèmes quasi-autonomes de stockage d'énergie et de motorisation électrique selon l'invention qui ont la capacité de s'auto-alimenter en énergie, et de stocker cette énergie pour utilisation lors de phases de traction, sont particulièrement avantageux.

Les systèmes quasi-autonomes de stockage d'énergie et de motorisation électrique selon l'invention qui comportent additionnellement un générateur auxiliaire à air comprimé capable de :
- transformer l'énergie accumulée par le système à air comprimé de l'essieu ou du bogie, sur lequel ledit système est installé, en énergie stockable dans le module de stockage d'énergie dudit système; et
- de recharger le module de stockage d'énergie dudit système à partir du système à air comprimé,
sont d'un intérêt particulier.

Selon une autre variante avantageuse, les systèmes quasi-autonomes de stockage d'énergie et de motorisation électrique selon l'invention comportent additionnellement un générateur auxiliaire, positionné de préférence à l'interface entre ledit système et le châssis du véhicule porté par l'essieu et/ou le bogie sur lequel ledit système est installé, ledit générateur auxiliaire :
- transformant l'énergie mécanique cinétique émise par les déplacements longitudinaux, et/ou transversaux et/ou verticaux du véhicule par rapport au dit système en énergie stockable dans le module de stockage d'énergie dudit système; et
- permettant de recharger le module de stockage d'énergie du système à partir de l'énergie mécanique générée par ces déplacements.

**Un** second **objet** de la présente invention est constitué par les bogies équipés d'au moins un système selon le premier objet de l'invention, lesdits bogies ayant pour fonction principale d'être des bogies porteurs et pour fonction secondaire d'apporter au véhicule qu'ils portent un complément de capacité de traction ou de freinage.

Avantageusement, les bogies de l'invention ont pour fonction principale d'être des bogies porteurs et pour fonction secondaire d'apporter au véhicule qu'ils portent un complément de capacité de traction ou de freinage.

**Un** troisième **objet** de l'invention est constitué par les véhicules tractables quasi-autonomes comportant au moins un bogie selon le second objet de l'invention.

**Un** quatrième **objet** de l'invention est constitué par les convois comportant au moins un véhicule tracteur au moins partiellement motorisé par une source d'énergie externe et/ou non régénérable et un nombre n de véhicules tractables attachés au(x) véhicule(s) tracteur(s) ou à un ou plusieurs autres véhicules tractables. Ce convoi se caractérise en ce que au moins un des véhicules tractables est tel que défini dans le troisième objet de l'invention.

De préférence, dans les convois de l'invention, le véhicule tracteur est une locomotive et le véhicule tractable de préférence un wagon.

Selon une autre variante d'intérêt, l'énergie récupérée dans un des véhicules tractables est utilisée pour apporter une capacité de traction ou de freinage pendant une période limitée de temps telle une opération de déplacement du véhicule tractable, mais non tracté, dans une station de triage.

Selon une autre variante préférentielle, dans les convois de l'invention, l'énergie récupérée dans un des véhicules tractable est partiellement transférée à un autre véhicule tractable dudit convoi et/ou au véhicule tracteur.

### Description de modes préférentiels de l'invention

L'invention consiste en un système quasi-autonome de stockage d'énergie et de motorisation électrique qui peut être installé sur les bogies porteurs d'un train de voitures pour fournir un effort de traction ou de freinage électrique.

De plus l'installation du système de l'invention sur les bogies de tout ou partie du convoi attaché à la motrice fournit, par addition des puissances, un complément de puissance important à la puissance de la motrice.

L'énergie de recharge du système de stockage d'énergie est principalement obtenue par freinage régénératif : l'énergie mécanique engendrée par l'inertie du convoi ou par la traction de la motrice du convoi, est transmise des roues à l'essieu puis au groupe moteur/générateur et ensuite convertie pour être stockée.

Des processus de recharge auxiliaires peuvent être aussi envisagés :
- par connexion au circuit auxiliaire (circuit électrique circulant le long du convoi pour alimenter les systèmes auxiliaires comme le chauffage ou la climatisation, l'éclairage, etc.);
- par un petit alternateur entrainé par un moteur pneumatique connecté à la conduite de freinage;
- par la récupération de l'énergie de mouvement de la voiture par rapport au bogie (mouvements transversaux et verticaux);
- par connexion électrique externe lorsque le convoi est à l'arrêt (par exemple un branchement au réseau électrique).

Le contrôle des modes de traction/freinage et charge/décharge du système de stockage d'énergie est assuré par un système à microprocesseur et un ensemble de capteurs comprenant entre autres un ou plusieurs accéléromètres, inclinomètres, capteurs de vitesse, capteurs de courant et tension, capteurs de pression.

La sélection du mode et de l'amplitude de traction ou de freinage est basée sur l'accélération subie par le bogie ou l'essieu, son inclinaison, sa vitesse ainsi que la pression ou la variation de la pression de la conduite de freinage ou encore la position ou le changement de position du levier de freinage.

Une personne passagère à bord d'un véhicule sait évaluer, sans utiliser sa vision, si le véhicule est en accélération ou en freinage, en montée ou en descente, en virage ou en ligne droite, et dans la plupart des cas si il serait opportun d'augmenter ou de réduire l'effort d'accélération ou de freinage du véhicule. De la même façon le contrôleur de l'invention est programmé pour déterminer grâce à ses capteurs l'état cinétique du bogie ou de l'essieu sur lequel il est embarqué : les signaux mesurés sont filtrés, traités et combinés, leurs évolutions dans le temps sont analysées de façon à caractériser sans ambigüité l'état cinétique actuel et passé du véhicule. En fonction de ces informations et de la commande de freinage, le contrôleur décide du mode et de l'amplitude de traction ou freinage qui doit être appliqué.

Par exemple dans une application ferroviaire, si le contrôleur détecte une accélération positive et une inclinaison nulle ou positive dans la direction du déplacement indiquant une circulation à plat ou en montée, il détermine que le wagon sur lequel il est embarqué est tiré par la locomotive et que celle-ci cherche à accélérer le train. Le contrôleur décide alors d'appliquer et d'augmenter très progressivement un effort de traction pour assister la locomotive.

Dans un autre cas, si une décélération est détectée avec une inclinaison positive après une inclinaison nulle ou négative, et si il n'y a pas de lecture de commande de freinage (pneumatique ou mécanique), le contrôleur constate que le train est en train de ralentir dans une pente et décide d'augmenter progressivement l'effort de traction pour compenser ce ralentissement.

Dans encore une autre configuration, dès qu'une commande pneumatique ou mécanique du frein est détectée, et quelles que soient les autres informations, le contrôleur applique un effort de freinage électrique pour assister le freinage mécanique du convoi.

Enfin, le contrôleur est programmé pour identifier, utiliser ou ignorer les accélérations particulières dues aux chocs engendrés par les tamponnements et les jeux d'attelages lors du "décollage" d'un train ou d'un convoi de remorques.

Les paramètres du contrôleur sont réglés pour s'assurer que les efforts de traction ou de freinage complémentaires apportés au train ou au convoi par l'invention sont progressifs tout en étant substantiels, et assistent efficacement la locomotive ou le camion tracteur tout en laissant un contrôle complet et absolu au conducteur du train ou du convoi.

Afin d'optimiser la sécurité, le système de l'invention inhibe de préférence tout effort de traction pour des vitesses inférieures à un seuil prédéfini afin d'interdire des démarrages autonomes; selon certains critères sécuritaires cette inhibition pourra être supprimée.

De plus, le système de l'invention conserve le caractère sécuritaire du freinage pneumatique (freinage automatique lors de la mise à la pression atmosphérique).

Les éléments principaux constitutifs de l'invention sont déjà présents dans les voitures électriques individuelles :
- système de stockage d'énergie à batterie électrochimique (nickel-cadmium, nickel métal hydride, acide-plomb, lithium ion, li-ion polymère, lithium métal polymère, etc.), on estime qu'un poids allant de 150 à 400 kg et un volume de 0,15 à 0,5 m3 sont suffisants pour le stockage d'énergie ;
- convertisseur électrique : utilisant des semi-conducteurs de puissance comme les IGBT ou GTO, en mode onduleur, redresseur ou hacheur, ces convertisseurs existent depuis une vingtaine d'années et sont distribués par de nombreux fabricants. On estime qu'un poids de environ 50 kg et un volume de 0,05 m3 seraient nécessaires ;
- groupe moteur/générateur : système compact de motorisation électrique à courant alternatif (moteur à induction) ou à courant continu (de préférence à aimant permanent), du type de ceux remplaçant ou complémentant les moteurs thermiques habituels des voitures de tourisme dans les voitures de tourismes électriques ou hybrides. On estime qu'un moteur de 0,5 m de long et 0,35 m de diamètre pesant environ 60 kg fournirait la puissance désirée ; et
- contrôleur électronique à microprocesseur programmé pour le mode de fonctionnement spécifique de l'invention requérant un traitement original des informations reçues des capteurs. Le contrôleur électronique est installé de façon à minimiser les signaux parasites d'accélération et d'inclinaison engendrés par les vibrations et chocs de roulement.

### Description détaillée des figures

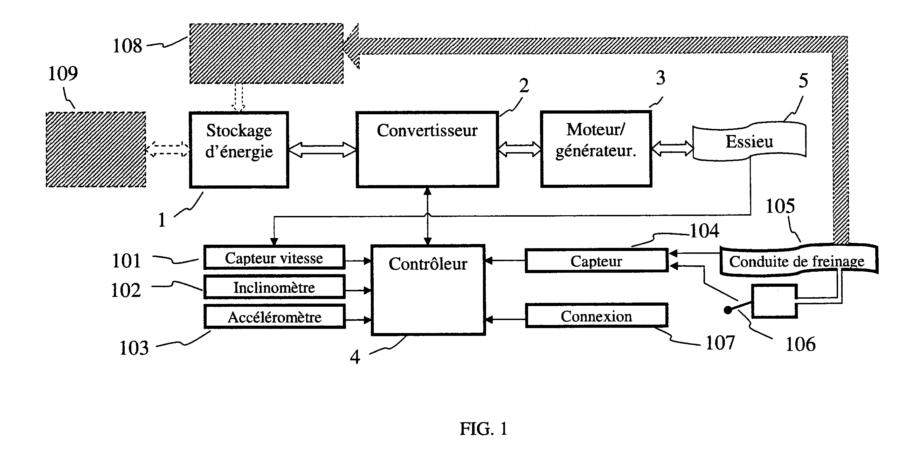

**Le diagramme de la** **Figure 1** représente les composants principaux de l'invention (en trait gras) ainsi que leurs interfaces avec les composants existant du bogie. Les flèches larges représentent les échanges d'énergie, les flèches fines montrent les échanges d'informations. La section hachurée indique un système optionnel.

L'énergie emmagasinée dans le stockage d'énergie (1) est transmise sous forme électrique du/vers le groupe moteur/générateur (3) au travers d'un convertisseur d'énergie électrique (2). Le groupe moteur/générateur (3) convertit l'énergie électrique en énergie mécanique transmise vers/depuis l'essieu (5).

Le module contrôleur (4) reçoit les informations suivantes du système :
- vitesse de circulation déduite de la vitesse de rotation de l'essieu captée par un capteur de vitesse (101) ;
- inclinaison du châssis sur lequel l'invention est installée captée par un inclinomètre (102) ;
- accélération du châssis sur lequel l'invention est installée captée par un accéléromètre (103) ;
- commande du mode frein captée par un capteur (104) mesurant la pression dans la conduite de freinage (105) et/ou détectant la position du levier mécanique de freinage (106) ; et
- éventuellement des informations externes transmises au travers d'une interface de connexion (107).

En fonction de ces informations le module contrôleur (4) décide du mode de fonctionnement et contrôle le transfert d'énergie entre le stockage d'énergie et le groupe moteur/générateur en modulant le flux d'énergie dans le convertisseur d'énergie électrique (2).

L'énergie emmagasinée dans le module de stockage d'énergie (1) provient principalement de la récupération de l'énergie cinétique du train pendant les phases de freinage. Il est possible d'ajouter une source d'énergie accessoire complémentaire par raccordement du module de stockage d'énergie (1) à un générateur auxiliaire (108) alimenté par exemple par un moteur pneumatique branché sur la conduite de freinage (105) ou bien par un générateur piézoélectrique exploitant les mouvements mécaniques de la remorque par rapport au bogie. On peut également accessoirement raccorder la module de stockage d'énergie (1) à une source d'énergie externe (109).

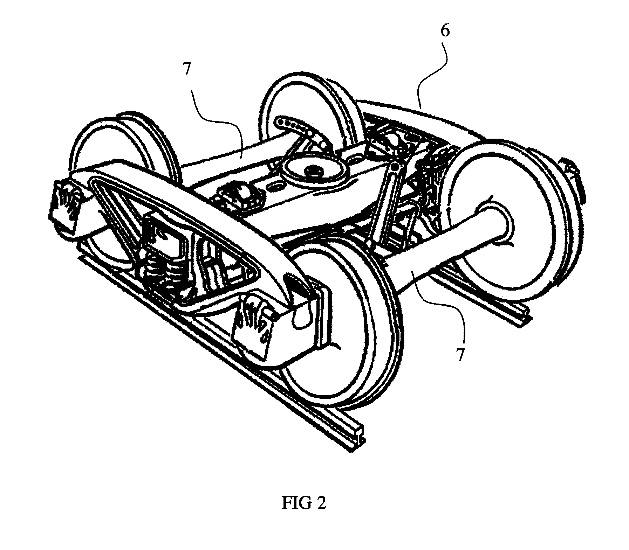

**La** **Figure 2** représente un bogie porteur ferroviaire traditionnel qui comporte notamment un châssis (6) et deux essieux (7) dans lequel aucune capacité de stockage d'énergie, de traction ni de freinage électrique et régénératif n'existe.

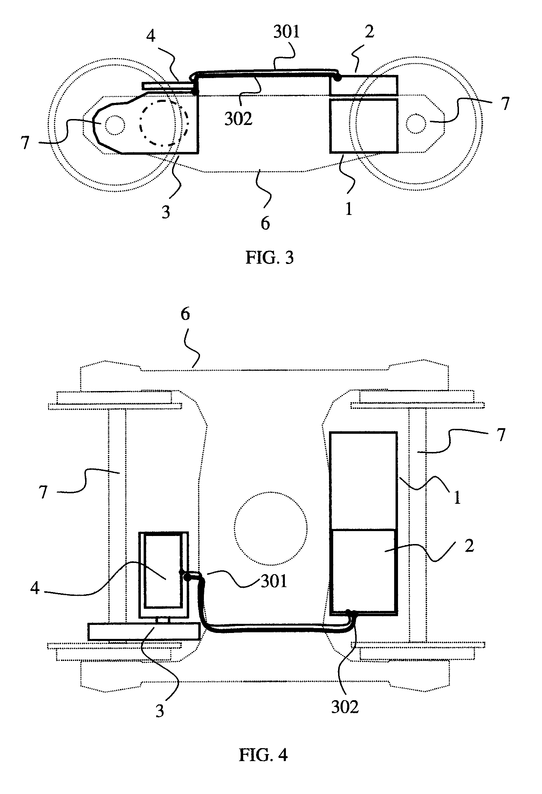

**La** **Figure 3** est une vue de face d'un concept d'installation des composants de l'invention sur un bogie ferroviaire typique : module de stockage d'énergie (1), convertisseur d'énergie (2), groupe moteur/générateur (3), contrôleur (4) et câbles de contrôle (301) et de puissance (302).

L'installation est faite de façon à respecter les gabarits de circulation du bogie et du train, de laisser l'espace nécessaire aux mouvements des différents systèmes mécaniques du bogie : levier et patins de freinage, suspension, enfin de ne pas limiter le débattement du wagon par rapport au bogie.

Le module de stockage d'énergie (1) est attaché au châssis (6) entre deux roues d'un des essieux (7). Le convertisseur d'énergie (2) est installé sur le ou à côté du module de stockage d'énergie (1). L'énergie électrique convertie est transférée au groupe moteur/générateur (3) par les câbles (302). Les informations sur l'état du module de stockage d'énergie (1) et du convertisseur (2) et les signaux de contrôle du convertisseur (2) sont transmis depuis le contrôleur (4) par les câbles de contrôle (301).

La partie statique du groupe moteur/générateur (3) est attachée au châssis (6). La partie rotative du groupe moteur/générateur est reliée par un lien mécanique rigide ou flexible à l'essieu (7) afin de transmettre l'effort mécanique. Le contrôleur (4) est installé par exemple sur le groupe moteur/générateur (3).

**La** **Figure 4** représente une vue de dessus du même concept d'installation des composants de l'invention sur un bogie ferroviaire typique : stockage d'énergie (1), convertisseur d'énergie (2), groupe moteur/générateur (3) et contrôleur (4).

L'installation est faite de façon à respecter les gabarits de circulation du bogie et du train, de laisser l'espace nécessaire aux mouvements des différents systèmes mécaniques du bogie : levier et patins de freinage, suspension, enfin de ne pas limiter le débattement du wagon par rapport au bogie.

Le module de stockage d'énergie (1) est attaché au châssis (6) entre deux roues d'un des essieux (7). Le convertisseur d'énergie (2) est installé sur le ou à côté du module de stockage d'énergie (1). L'énergie électrique convertie est transférée au groupe moteur/générateur (3) par les câbles (302). Les informations sur l'état du module de stockage d'énergie (1) et du convertisseur (2) et les signaux de contrôle du convertisseur (2) sont transmis depuis le contrôleur (4) par les câbles de contrôle (301).

La partie statique du groupe moteur/générateur (3) est attaché au châssis (6). La partie rotative du groupe moteur/générateur est reliée par un lien mécanique rigide ou flexible à l'essieu (7) afin de transmettre l'effort mécanique. Le contrôleur (4) est installé par exemple sur le groupe moteur/générateur (3).

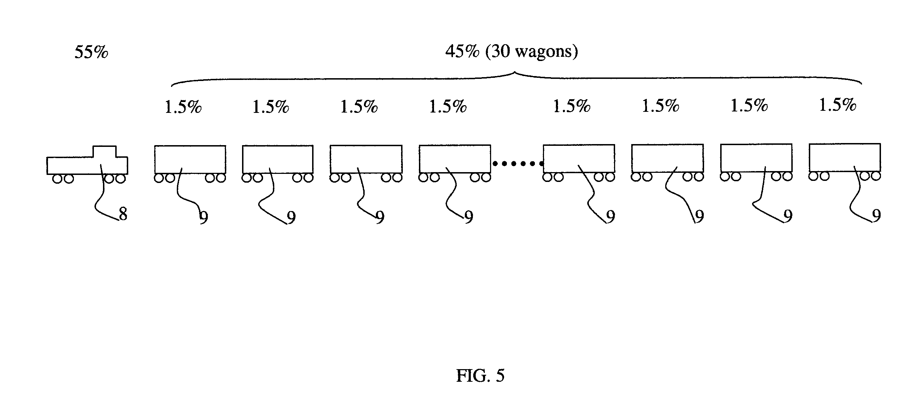

**La** **Figure 5** représente un exemple d'application de l'invention sur un train traditionnel modifié. Il s'agit d'un train traditionnel composé d'une locomotive (8) et d'un convoi de wagons (9), dont chaque wagon (9) a été équipé avec les systèmes selon l'invention (un système sur chaque bogie). Les informations quantitatives indiquées dans la Figure 5 sont expliquées dans l'exemple 1 d'application de l'invention ci-dessous.

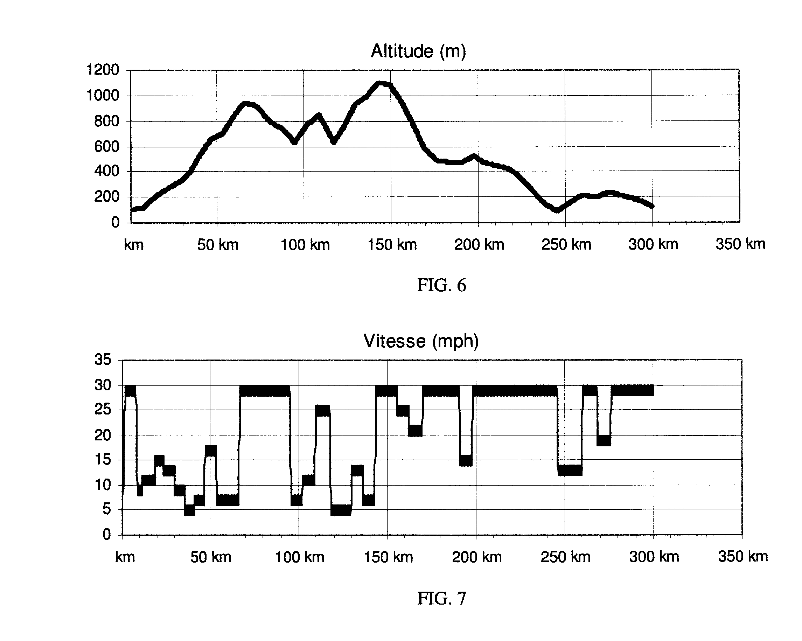

**Les** **Figure 6 à 9** représentent les diagrammes d'énergies et vitesse d'un train conventionnel non équipé de l'invention et d'un train équipé de l'invention, le long d'un profil de voie.

Les figures sont une représentation des courbes de vitesse, d'énergie consommée et stockée par un convoi lors de sa circulation le long d'un profil de voie ferrée, la distance parcourue étant donnée en kilomètres en abscisse. La direction de déplacement du train est dans le sens croissant des abscisses, de la gauche vers la droite.

La Figure 6 présente la variation d'altitude en mètres le long du profil de la voie, en fonction de la distance parcourue. Cette courbe permet notamment de voir si le train est en montée ou en descente.

La Figure 7 donne la vitesse du train en miles par heure, calculée en fonction de la puissance maximum disponible et limitée à 30 mph. On observe aisément les variations de vitesse en fonction de la pente : lorsque la pente est ascendante, la vitesse du train est réduite puisque la puissance de traction est limitée ; lorsque la pente est descendante, la vitesse est maximum. On prend pour hypothèse qu'un train, équipé de l'invention ou non, doit suivre ce profil de vitesse le long du parcours.

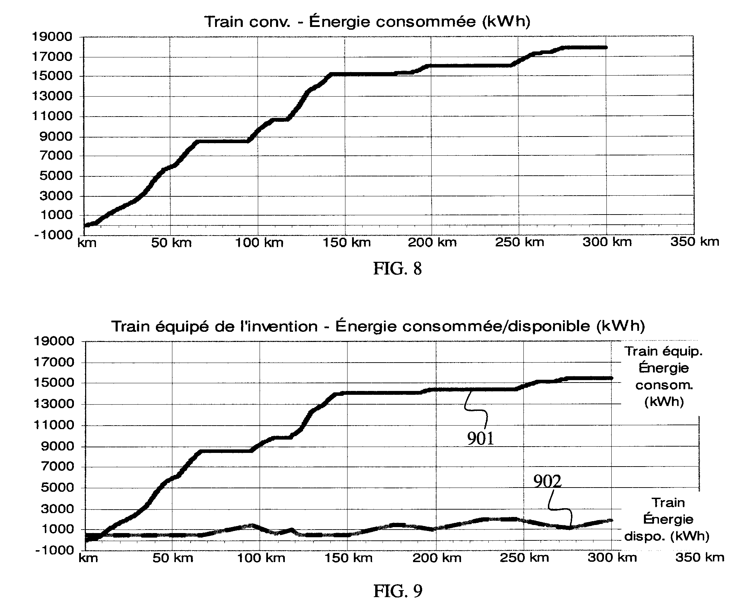

La Figure 8 montre l'évolution de l'énergie consommée par la locomotive d'un train conventionnel, non équipé de l'invention, en kilowatts-heure. Dans les montées (de 0 à 70 km, de 95 à 110 km, de 120 km à 140 km, etc.) la locomotive fournit un effort de traction en utilisant sa pleine puissance : l'énergie totale consommée croît rapidement ; dans les phases de plat ou de descente (de 70 km à 95 km par exemple), moins de puissance voire aucune puissance (mode freinage) n'est nécessaire et l'énergie totale consommée croît moins rapidement.

La Figure 9 montre sur la courbe (901) l'évolution de l'énergie consommée par la locomotive d'un train équipé de l'invention, en kilowatts-heure, et sur la courbe (902) l'évolution de l'énergie totale disponible stockée dans les wagons équipés de l'invention en kilowatts-heure. On fait l'hypothèse que les modules de stockage d'énergie de l'invention installés sur chaque wagon sont initialement à leur minimum de charge et ne peuvent initialement pas fournir d'énergie.

Durant la première phase de montée (de 0 à 70 km), la puissance fournie par la locomotive est la même que celle du train non équipé de l'invention, et le cumul d'énergie consommée suit la même courbe (la courbe de la Figure 8 et la courbe (901) sont les mêmes entre 0 et 70 km). Dans la phase de descente qui suit (de 70 km à 95 km),le conducteur du train commande le mode freinage. Les contrôleurs de l'invention installés sur chaque wagon détectent cette commande et ordonnent chacun à son convertisseur d'appliquer un effort de freinage via le groupe moteur/générateur et d'emmagasiner l'énergie de freinage dans les modules de stockage d'énergie de l'invention : l'énergie disponible stockée augmente. Lors de l'entrée dans la phase suivante de montée (95 km à 110 km), chaque contrôleur détecte indépendamment le changement d'inclinaison ainsi que le ralentissement et décide de passer en mode traction. L'énergie emmagasinée dans l'invention est alors utilisée pour fournir un effort de traction et par conséquent pour réduire la puissance que la locomotive du train équipé de l'invention doit fournir pour obtenir la même vitesse de circulation que celle du train non équipé de l'invention. En conséquence, la consommation d'énergie de la locomotive du train équipé de l'invention est réduite, et l'énergie totale consommée croît moins rapidement. Durant cette même phase, l'énergie disponible dans les modules de stockage d'énergie de l'invention décroit.

En continuant le parcours alternant les phases de montée et de descente, le phénomène se répète.

L'exemple ici montré est calculé pour 1 locomotive et 40 wagons. Le bénéfice final dans ce cas est une réduction 2500 kWh : au point d'arrivée à 300 km, la courbe (901) indique une consommation totale de 15500 kWh pour la locomotive du train équipé de l'invention, contre 18000 kWh sur la Figure 8 pour la locomotive du train non équipé de l'invention. L'invention permet dans ces conditions une réduction de 14% de consommation de carburant sur une distance de 300 km.

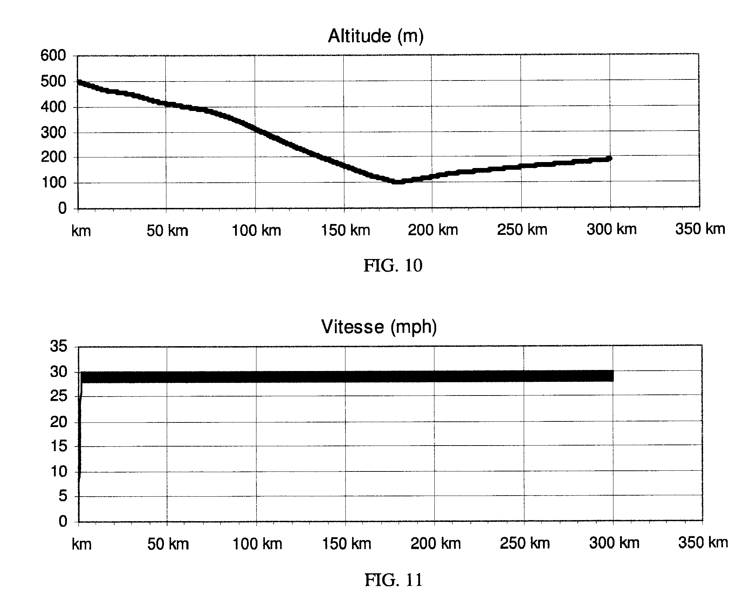

**Les** **Figures 10 à 13** représentent un autre exemple de digrammes d'énergies et vitesses d'un train conventionnel non équipé de l'invention et d'un train équipé de l'invention, le long d'un profil de voie.

La figure est une représentation des courbes de vitesse, d'énergie consommée et stockée par un convoi lors de sa circulation le long d'un profil de voie ferrée, la distance parcourue étant donnée en kilomètres en abscisse. La direction de déplacement du train est dans le sens croissant des abscisses, de la gauche vers la droite.

La Figure 10 présente la variation d'altitude en mètres le long du profil de la voie, en fonction de la distance parcourue. Cette courbe permet notamment de voir si le train est en montée ou en descente.

La Figure 11 donne la vitesse du train en miles par heure, calculée en fonction de la puissance maximum disponible et limitée à 30 mph. Pour le profil de voie considéré, le parcours est soit en descente soit en faible pente ascendante : il est donc possible de conserver une vitesse constante de 30 mph.

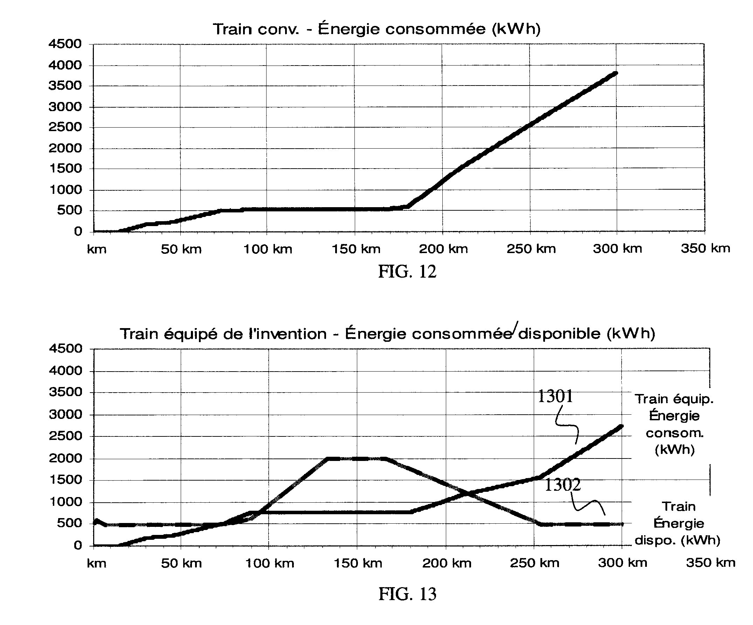

La Figure 12 montre l'évolution de l'énergie consommée par la locomotive d'un train conventionnel, non équipé de l'invention, en kilowatts-heure. De 0 km à 72 km, la pente descendante n'est pas suffisante pour permettre au train de conserver une vitesse de 30 mph sans que la locomotive ne fournisse d'effort : l'énergie totale consommée par la locomotive du train non équipé de l'invention croît donc lentement. De 72 km à 180 km, la pente descendante est plus forte et le train est en mode freinage, ne nécessitant aucun effort de la locomotive. À partir de 180 km, la pente devient ascendante et la locomotive doit fournir plus de puissance : l'énergie totale consommée par la locomotive du train non équipé de l'invention croît jusqu'à atteindre 3800 kWh au point d'arrivée.

La Figure 13 montre sur la courbe (1301) l'évolution de l'énergie consommée par la locomotive d'un train équipé de l'invention, en kilowatts-heure, et sur la courbe (1302) l'évolution de l'énergie totale disponible stockée dans les wagons équipés de l'invention en kilowatts-heure. On fait l'hypothèse que les modules de stockage d'énergie de l'invention installés sur chaque wagon sont initialement à leur minimum de charge et ne peuvent initialement pas fournir d'énergie. De 0 km à 72 km, la pente descendante n'est pas suffisante pour permettre au train de conserver une vitesse de 30 mph sans que la locomotive ne fournisse d'effort : l'énergie totale consommée par la locomotive du train équipé de l'invention croît donc faiblement de la même façon que la courbe de la Figure 12. De 72 à 90 km, la pente descendante est plus accentuée et le freinage est demandé au convoi par le conducteur de la locomotive : chaque contrôleur de l'invention détecte la demande de freinage et décide donc d'appliquer un effort de freinage qui permet de générer de l'énergie et de recharger les modules de stockage d'énergie : la courbe (1302) croît. Cependant, la pente n'est pas suffisante pour entraîner le convoi légèrement freiné par l'invention et un effort de traction est nécessaire de la part de la locomotive du train équipé de l'invention pour maintenir une vitesse de 30 mph, ce qui a pour effet d'augmenter l'énergie totale consommée (1301) . Cette séquence entre 72 et 90 km montre comment dans les faibles pentes une alternance de modes traction et freinage peut être utilisée pour recharger les modules de stockage d'énergie tout en maintenant une vitesse désirée. De 90 km à 130 km, la pente plus forte permet au convoi de garder une vitesse de 30 mph tout en continuant de recharger les modules de stockage d'énergie de l'invention sans nécessiter aucun effort de traction de la part de la locomotive. À partir de 130 km, les modules de stockage d'énergie sont pleins et ne peuvent plus emmagasiner d'énergie. De 170 km à 180 km, la pente est moins forte et la vitesse du convoi est maintenue grâce aux efforts de traction fournis par les wagons équipés de l'invention en puisant de l'énergie dans les modules de stockage d'énergie ; la locomotive du train équipé de l'invention n'a pas besoin d'appliquer d'effort de traction et ne consomme donc pas d'énergie. De 180 km à 250 km le profil de voie est en montée et la locomotive du train équipé de l'invention doit fournir un effort de traction ; puisque chaque contrôleur de l'invention détecte une pente ascendante, chaque wagon équipé de l'invention applique également un effort de traction et la puissance que doit fournir la locomotive du train équipé de l'invention est inférieure à celle que doit fournir la locomotive du train non équipé, pour une même vitesse de 30 mph : la courbe (1301) de l'énergie totale consommée par la locomotive du train équipé de l'invention croît moins rapidement que la courbe de la Figure 12 du train non équipé ; simultanément la courbe (1302) de l'énergie totale stockée dans les modules de stockage d'énergie décroit jusqu'à ce que les modules soient à leur minimum acceptable. Dans la section finale de 250 km à 300 km, les locomotives du train équipé de l'invention et celle du train non équipé doivent fournir la même puissance puisque les modules de stockage d'énergie ne peuvent plus en fournir : les pentes de la courbe de la Figure 12 et de la courbe (1301) sont les mêmes. Finalement, au point d'arrivée à 300 km la locomotive du train équipé de l'invention aura consommé 2750 kWh alors que la locomotive du train non équipé aura consommé 3800 kWh : le résultat est une réduction de 1050 kWh, soit 28% de la consommation de carburant.

Le profil est encore plus propice que dans le cas des Figures 6 à 9 pour l'utilisation d'un système de régénération d'énergie en freinage dynamique, puisque la première section du parcours est en pente descendante permettant d'accumuler de l'énergie.

### Avantages et applications

Application de l'invention: tout train ou convoi pour lequel la somme des puissances unitaires modérées de l'invention installées sur chaque bogie ou essieu fournira un complément de puissance important à la puissance de la locomotive ou de la motrice, proportionnel au nombre de voitures équipées du système,

Parmi les avantages les plus évidents du système de l'invention on peut, de façon non exhaustive, mentionner :
- la réduction de la consommation de puissance de la locomotive ou motrice;
- la réduction de la consommation de carburant, pour les locomotives et motrices à moteur thermique;
- la réduction des émissions de gaz à effet de serre pour les locomotives et motrices à moteur thermique;
- la récupération de l'énergie de freinage lors des phases de décélération et de descente;
- une répartition améliorée des efforts de traction;
- la réduction sensible de l'usure des patins de freinage.

De plus, l'invention peut être installée de façon indépendante sur chaque bogie sans aucun changement dans le mode de conduite de la locomotive ou de la motrice.

Selon le nombre de bogies ainsi équipés, l'opérateur de la locomotive perçoit simplement une augmentation de la puissance d'accélération et de freinage, de minime à importante. Il peut alors moduler en conséquence la demande d'effort.

Le coût unitaire de fabrication de l'invention est faible puisqu'elle utilise des composants développés pour l'industrie automobile et qui répondent donc déjà à des objectifs de coûts très bas.

Le coût au kW de la puissance complémentaire obtenue grâce à ce système est nettement plus faible que celui de la remotorisation d'une locomotive ou de l'ajout d'un « tender » de récupération d'énergie de freinage. On estime la réduction de coût de l'ordre de 30 à 50%.

De plus, les exploitants peuvent investir dans ce système de façon progressive et selon leurs capacités de financement et leurs priorités opérationnelles.

L'installation de cet équipement peut être faite lors des opérations de maintenance périodique des bogies, lors des changements de roues par exemple. La maintenance de ce produit est principalement limitée à la maintenance du système de stockage d'énergie (peu fréquent dans le cas des batteries), qui peut rapidement se faire lors des autres opérations de maintenance.

Une autre application de ce système pourra être l'utilisation contrôlée de cette capacité de traction autonome de la voiture pour des trajets de courte distance et à petite vitesse. Par exemple, en application ferroviaire dans les gares de triages, on pourrait déplacer les wagons à petite vitesse en utilisant l'énergie emmagasinée dans le système et éviter l'utilisation d'une locomotive. Une autre application dans les convois routiers ou ferroviaires miniers serait de déplacer le convoi à petite vitesse pour les phases de chargement continu de minerai, sans avoir à mettre en route l'unité motrice.

Les exemples suivants sont donnés à titre purement illustratif et ne sauraient être considérés comme constituant une quelconque limitation de l'invention telle qu'elle est définie dans sa généralité.

### Exemples

Les valeurs indiquées dans ces exemples sont données à titre illustratif et peuvent varier en fonction de l'application et du mode d'utilisation. Les désignations des composants ainsi que les noms commerciaux sont également donnés à titre illustratif et ne présument pas de l'unicité de tels composants.

### Exemple 1 - Train traditionnel modifié selon l'invention

Le train est constitué d'une locomotive et de 30 wagons de fret comme représenté dans la Figure 5.

La locomotive est dimensionnée pour une puissance maximale de 3 000 chevaux. Les 30 wagons sont équipés d'un système selon l'invention sur chacun de leurs deux bogies, pour un total de 60 systèmes pouvant également produire une puissance maximale de 3 000 chevaux (60 x 50 chevaux); 50 chevaux étant la puissance unitaire du système selon l'invention utilisé.

Le système selon l'invention utilisé pour équiper les bogies est constitué d'un module de stockage de l'énergie de type batterie lithium métal polymère commercialisé par la compagnie Batscap sous la dénomination commerciale "batterie Batscap", d'un convertisseur de type à semi-conducteurs IGBT commercialisé par la compagnie Enova sous la dénomination commerciale "Inverter 60", d'un groupe moteur générateur de type courant alternatif commercialisé par la compagnie Enova sous la dénomination commerciale "EDU-60", d'un contrôleur électronique à microprocesseur similaire à ceux utilisés dans l'industrie des véhicules électriques et adapté aux spécificités de l'invention.

Prenons le cas où dans une approche traditionnelle, en fonction de l'accélération et de la pente, la locomotive devrait produire une puissance de 2000 chevaux. Avec l'utilisation de l'invention, chaque bogie équipé de l'invention peut aisément fournir 15 chevaux pendant une longue durée, soit 30 chevaux par wagons, ce qui produit un surcroît de puissance de 900 chevaux (30 x 30), soit 45% de la puissance initiale de la locomotive. Pour un même effort de traction total sur l'ensemble du train, la puissance fournie par la locomotive est réduite de ce même montant et celle-ci ne doit plus fournir que 1100 chevaux (55% de la puissance initiale).

L'énergie utilisée par les systèmes installés sur les bogies est ensuite récupérée lors des phases de freinage et de descente.

### Exemple 2 - Utilisation du système de l'invention dans une gare de triage

Un deuxième exemple concerne l'utilisation du système dans les gares de triage, où les wagons sont répartis et assemblés en convoi par des locomotives de petite puissance. Imaginons que le train à déplacer contienne 10 wagons équipés de l'invention sur chacun de leurs bogies : il y a 20 bogies (10 x 2) pouvant chacun fournir 50 chevaux, donc une puissance totale maximale de 1000 chevaux (20 x 50). Cette puissance est très largement suffisante pour déplacer le train à faible vitesse sans aucun besoin d'utiliser la puissance de la locomotive, soit une réduction de la consommation de 100% dans ce cas. On peut donc réaliser dans certains cas le triage de wagons sans aucune locomotive.

De multiples autres combinaisons peuvent être explorées, un des grands avantages de l'invention étant la possibilité de l'installer sur une proportion plus ou moins élevée de wagons ou remorques sans autre conséquence que l'augmentation ou diminution proportionnelle de la puissance additionnelle disponible.

Bien que la présente invention ait été décrite à l'aide de mises en oeuvre spécifiques, il est entendu que plusieurs variations et modifications peuvent se greffer aux dites mises en oeuvre, et la présente invention vise à couvrir de telles modifications, usages ou adaptations de la présente invention suivant en général, les principes de l'invention et incluant toute variation de la présente description qui deviendra connue ou conventionnelle dans le champ d'activité dans lequel se retrouve la présente invention, et qui peut s'appliquer aux éléments essentiels mentionnés ci-haut, en accord avec la portée des revendications suivantes.

## Revendications

1. Système quasi-autonome de stockage d'énergie et de motorisation électrique destiné à être installé sur un bogie du type comportant un essieu (5, 7) et un châssis (6) pour fournir un effort de traction ou de freinage électrique à l'essieu comprenant :
- 1) au moins un module de stockage d'énergie (1) ayant la capacité de recevoir de l'énergie, de l'accumuler pendant un temps non nul et de la restituer à la demande sous forme électrique;
- 2) au moins un convertisseur électrique (2) convertissant l'énergie électrique fournie/absorbée par le module de stockage d'énergie (1) en tension et courant adaptés pour l'alimentation/la récupération de l'énergie du groupe moteur/générateur (3) ;
- 3) au moins un groupe moteur/générateur (3) transformant l'énergie électrique en énergie mécanique et inversement; et
- 4) un contrôleur (4) qui établit les commandes et fournit les signaux de contrôle aux différents composants du système en fonction des informations reçues de divers capteurs et interfaces,
le module de stockage d'énergie (1) accumulant ou restituant de l'énergie au convertisseur électrique (2), le convertisseur électrique (2), transférant cette énergie entre le module de stockage d'énergie (1) et le groupe moteur/générateur (3), le groupe moteur/ générateur (3) transformant l'énergie électrique reçue ou fournie du/par le convertisseur électrique (2) en énergie mécanique et le contrôleur (4) contrôlant le transfert d'énergie entre les éléments module de stockage d'énergie (1), convertisseur électrique (2) et groupe moteur/générateur (3) **caractérisé par le fait que** :
• les divers capteurs comprennent :
- un accéléromètre (103) permettant d'identifier l'accélération de l'essieu du bogie sur lequel le système est installé ; l'information de l'accélération ainsi recueillie étant utilisée par le contrôleur (4) pour optimiser le transfert d'énergie lors d'au moins une des opérations de traction, freinage et erre à laquelle ou auxquelles le dit système est soumis ;
- un inclinomètre (102) permettant d'identifier l'inclinaison de l'essieu du bogie sur lequel le système est installé; l'information relative à l'inclinaison ainsi recueillie étant utilisée par le contrôleur (4) pour optimiser le transfert d'énergie lors d'au moins une des opérations de traction, freinage et erre à laquelle ou auxquelles le dit système est soumis ;
• le contrôleur (4) est configuré pour :
- appliquer et augmenter très progressivement effort de traction produit par le groupe moteur/générateur (3) si l'information relative à l'inclinaison recueillie par le contrôleur (4) est nulle ou positive alors que l'information relative à l'accélération recueillie par le contrôleur (4) est positive.

2. Système selon la revendication 1, comportant additionnellement au moins un capteur de vitesse (101) apte à coopérer avec au moins un arbre tournant de l'essieu (5, 7), ledit capteur de vitesse (101) permettant d'identifier la direction et le mode de déplacement de l'essieu (5, 7), sur lequel le système est destiné à être installé; l'information de vitesse ainsi captée étant utilisée par le contrôleur (4) pour optimiser le transfert d'énergie entre le module de stockage d'énergie (1) et le groupe(s) moteurs/générateur (3) lors d'au moins une des opérations de traction, freinage et erre à laquelle ou auxquelles le dit système est soumis.

3. Système selon la revendication précédente, comportant additionnellement au moins un capteur de pression apte à coopérer avec des modules pneumatiques de l'essieu (5, 7) et/ou un capteur mécanique et des modules mécaniques de l'essieu (5, 7)permettant de détecter le fonctionnement en mode freinage de l'essieu (5, 7) sur lequel le système est destiné à être installé; l'information de mode de freinage ainsi captée étant utilisée par le contrôleur (4) pour optimiser le transfert d'énergie lors d'au moins une des opérations de traction, freinage et erre à laquelle ou auxquelles le dit système est soumis.

4. Système selon l'une quelconque des revendications précédentes, comportant additionnellement au moins une interface de connexion (107) de préférence électrique ou/et électromagnétique ou/et optique, positionnée sur le contrôleur (4), et permettant la connexion et/ou la communication du contrôleur (4) du système avec au moins un dispositif électrique ou/et électronique ou/et optique externe audit système.

5. Système selon l'une quelconque des revendications précédentes, comportant additionnellement au moins un module de connexion à un équipement externe, positionné sur le module de stockage d'énergie (1), et permettant le transfert d'énergie bidirectionnel entre un ou plusieurs équipements externe(s) au système et le module de stockage d'énergie (1) dudit système.

6. Système selon l'une quelconque des revendications précédentes, comportant additionnellement une résistance électrique, positionnée sur le module de stockage d'énergie et/ou le convertisseur électrique (2), et permettant la dissipation de l'énergie éventuellement excédentaire à la capacité de stockage du module de stockage d'énergie (1) dudit système.

7. Système selon l'une quelconque des revendications précédentes, comportant additionnellement un générateur auxiliaire (108) à air comprimé, ledit générateur auxiliaire (108) additionnel étant configuré pour :
- transformer l'énergie accumulée par le système à air comprimé de l'essieu (5, 7) ou du bogie, sur lequel ledit système est installé, en énergie stockable dans le module de stockage d'énergie (1) dudit système; et
- de recharger le module de stockage d'énergie (1) dudit système à partir du système à air comprimé.

8. Système selon l'une quelconque des revendications précédentes, comportant additionnellement un générateur auxiliaire (108) configuré pour :
- transformer l'énergie mécanique cinétique émise par les déplacements longitudinaux, et/ou transversaux et/ou verticaux du véhicule par rapport au dit système en énergie stockable dans le module de stockage d'énergie (1) dudit système; et
- permettre de recharger le module de stockage d'énergie (1) du système à partir de l'énergie mécanique générée par ces déplacements.

9. Bogie de véhicule tractable équipé d'au moins un système selon l'une quelconque des revendications précédentes, ledit bogie ayant pour fonction principale d'être un bogie porteur et pour fonction secondaire d'apporter au véhicule qu'il porte un complément de capacité de traction ou de freinage.

10. Bogie selon la revendication précédente dans lequel le contrôleur (4) est configuré pour déterminer automatiquement le mode de motorisation parmi traction, freinage ou erre en se basant uniquement sur les informations des capteurs portés par ledit bogie.

11. Véhicule tractable quasi-autonome comportant au moins un bogie selon l'une des deux revendications précédentes et un châssis connecté avec ledit bogie.

12. Convoi comportant au moins un véhicule tracteur au moins partiellement motorisé par une source d'énergie externe et/ou non régénérable et un nombre n de véhicules tractables attachés au(x) véhicule(s) tracteur(s) ou à un ou plusieurs autres véhicules tractables, ledit convoi étant **caractérisé en ce que** au moins 1 des véhicules tractables est tel que défini dans la revendication précédente.

13. Convoi selon la revendication précédente dans lequel le véhicule tracteur est une locomotive et le véhicule tractable est un wagon.

14. Convoi selon l'une quelconque des deux revendications précédentes, dans lequel au moins un véhicule tractable est configuré pour que l'énergie récupérée , par au moins un de ses bogies, soit utilisée pour apporter un complément de capacité de traction ou de freinage au convoi.

15. Convoi selon l'une quelconque des revendications 12 ou 13, dans lequel au moins un véhicule tractable est configuré pour que l'énergie récupérée , par au moins un de ses bogies, soit utilisée pour apporter une capacité de traction ou de freinage pendant une période limitée de temps telle une opération de déplacement du véhicule tractable, mais non tracté, dans une station de triage.

16. Convoi selon l'une quelconque des revendications 12 à 13, dans lequel au moins un véhicule tractable est configuré pour que l'énergie récupérée, par au moins un de ses bogies, soit partiellement transférée à un autre véhicule tractable dudit convoi et/ou au véhicule tracteur.

## Patentansprüche

1. Praktisch eigenständig arbeitendes Energiespeicherungs- und elektrisches Antriebssystem für die Installation auf einem Drehgestell mit einer Achse (5, 7) und einem Chassis (6), um an der Achse eine Zugbeanspruchung oder elektrische Bremsleistung zu liefern, bestehend aus:
- 1) mindestens einem Energiespeichermodul (1) mit der Fähigkeit, Energie aufzunehmen, sie während eines Zeitraums, der nicht Null ist, zu speichern und sie auf Anforderung in elektrischer Form freizusetzen;
- 2) mindestens einem elektrischen Stromrichter (2), der elektrische Energie umwandelt geliefert/aufgenommen über das Energiespeichermodul (1) mit Spannung und Strom, angepasst an die Energieversorgung/Wiedergewinnung des Baugruppen-Motors/Generators (3);
- 3) mindestens ein Baugruppen-Motor/Generator (3), der elektrische Energie in mechanische Energie umwandelt und umgekehrt.
- 4) eine Steuereinheit (4), die die Befehle erstellt und die Steuersignale an die
verschiedenen Bauelemente des Systems liefert, abhängig von den Informationen, die von den verschiedenen Sensoren und Schnittstellen empfangen werden,
vom Energiespeichermodul (1), das die Energie für den elektrischen Umwandler (2) sammelt oder freisetzt, vom elektrischen Wandler (2), der diese Energie zwischen dem Energiespeichermodul (1) und dem Baugruppen-Motor/Generator (3) überträgt, vom Baugruppen-Motor/Generator (3), der die elektrische Energie , die vom/durch den elektrischen Umwandler (2) geliefert oder empfangen wird, in mechanische Energie umwandelt und von der Steuereinheit (4), die die Energieübertragung zwischen den Elementen des Energiespeichermoduls (1), dem elektrischen Wandler (2) und dem Baugruppen-Motor/Generator (3) steuert, **gekennzeichnet durch** die Tatsache, dass:
• die verschiedenen Sensoren Folgendes umfassen:
einen Beschleunigungsmesser (103), der es ermöglicht, die Beschleunigung der Achse am Drehgestell, auf dem das System installiert ist, zu ermitteln, die so erhaltene Beschleunigung wird von der Steuereinheit (4) verwendet, um die Energieübertragung zu optimieren, die während mindestens einer Zugtätigkeit, Bremsaktion und Fahrt, der oder denen das besagte System unterliegt, erfolgt;
- einen Neigungsmesser (102), der es ermöglicht, die Neigung der Achse auf dem Drehgestell, auf dem das System installiert ist, zu ermitteln, die Information in Bezug auf die Neigung, die so erhalten wird, wird von der Steuereinheit (4) verwendet, um die Energieübertragung zu optimieren, die bei mindestens einer Zugtätigkeit, Bremsaktion und Fahrt, der oder denen das System unterliegt, erfolgt;
• die Steuereinheit (4) wird konfiguriert, um:
- die Zugbeanspruchung, die vom Baugruppen-Motor/Generator (3) produziert wird, schrittweise einzusetzen und zu erhöhen, wenn die Informationen in Bezug auf die Neigung, die von der Steuereinheit (4) empfangen werden, Null oder positiv sind, während die Informationen bezüglich der Beschleunigung, die von der Steuereinheit (4) empfangen werden, positiv sind.

2. Das System gemäß Anspruch 1, umfasst zusätzlich mindestens einen Drehzahlsensor (101), der mit mindestens einer Drehwelle der Achse (5, 7) zusammenwirken kann, der genannte Drehzahlsensor (101) ermöglicht, die Richtung und die Art der Verschiebung der Achse (5, 7) zu ermitteln, auf der das System installiert werden soll; die Informationen zur Geschwindigkeit, die so erfasst werden,
werden von der Steuereinheit (4) verwendet, um die Energieübertragung zwischen dem Energiespeichermodul (1) und der/den Baugruppen-Motoren(en)/Generator(en) zu optimieren, die während mindestens einer Zugtätigkeit, Bremsaktion und Fahrt, der oder denen das besagte System unterliegt, erfolgt;

3. Das System gemäß dem oben genannten Anspruch, das zusätzlich mindestens einen Drucksensor umfasst, der mit den pneumatischen Modulen der Achse (5, 7) zusammenarbeiten kann, und/oder einen mechanischen Sensor und mechanische Module der Achse (5,7), die dem Sensor den Betrieb im Bremsmodus der Achse (5, 7) auf dem System ermöglichen, auf dem er installiert werden soll; die so erhaltenen Informationen des Bremsmodus werden von der Steuereinheit (4) verwendet, um
die Energieübertragung zu optimieren, die bei mindestens einer Zugtätigkeit, Bremsaktion und Fahrt, der oder denen das besagte System unterliegt, erfolgt.

4. Das System gemäß eines der oben genannten Ansprüche umfasst außerdem mindestens eine Verbindungsschnittstelle (107) der elektrischen und/oder elektromagnetischen und/oder optischen Präferenz auf der Steuereinheit (4) und ermöglicht somit den Anschluss an und/ oder die Kommunikation der Steuereinheit (4) des Systems mit mindestens einem elektrischen Gerät und oder einem elektronischen und/oder optischem externen Prüfsystem.

5. Das System gemäß eines der oben genannten Ansprüche, besteht zusätzlich mindestens aus einem Anschlussmodul an eine externe Ausstattung, auf dem Energiespeichermodul (1) positioniert, und ermöglicht die Energieübertragung in zwei Richtungen zwischen einer oder mehreren externen Ausstattungen des Systems und dem Energiespeichermodul (1) des genannten Systems.

6. Das System gemäß eines der vorher genannten Ansprüche umfasst zusätzlich einen elektrischen Widerstand, auf dem Energiespeichermoduls und oder dem elektrischen Umwandler (2), und ermöglicht die Energieverlustleistung, die
die Speicherkapazität des Energiespeichermodells (1) des genannten Systems übersteigt.

7. Das System gemäß eines der oben genannten Ansprüche umfasst zusätzlich einen Druckluft-Hilfsgenerator (108), der genannte Hilfsgenerator (108) ist konfiguriert, um
- Energie, die vom Druckluftsystem der Achse (5, 7) oder des Drehgestells, auf dem das besagte System installiert ist, gesammelt wird in Energie umzuwandeln, die im Energiespeichermodul (1) des besagten Systems gespeichert werden kann; und
- um das Energiespeichermodul (1) des genannten Systems über das Druckluftsystem wiederaufzuladen.

8. Das System gemäß eines der vorher genannten Ansprüche umfasst zusätzlich einen Hilfsgenerator (108), konfiguriert, um:
- mechanische Bewegungsenergie, die von den Längs- und/oder Quer- und/oder Vertikalverschiebungen des Fahrzeugs, in Bezug auf das genannte Energiespeichersystem im Energiespeichermodul (1) des genannten Systems emittiert wird, umzuwandeln; und
- um das Energiespeichermodul (1) des genannten Systems über die mechanische Energie,
die von diesen Verschiebungen generiert wird, wiederaufladen zu können.

9. Zugfahrzeugdrehgestell, ausgestattet mit mindestens einem System gemäß eines der oben genannten Ansprüche, die Hauptfunktion des genannten Drehgestells ist hierbei, als Träger-Drehgestell zu fungieren, die Sekundärfunktion besteht darin, dem Fahrzeug, mit dem es ausgestattet ist, eine ergänzende Zug- oder Bremsfähigkeit zu verleihen.

10. Drehgestell gemäß des vorher genannten Anspruchs, in dem die Steuereinheit (4) so konfiguriert ist, um automatisch die Art des Antriebs zwischen Zug, Bremsen oder Fahrt zu ermitteln, indem es sich allein auf die Informationen der Sensoren stützt, die auf dem genannten Drehgestell vorhanden sind.

11. Zugfahrzeug, praktisch eigenständig, mit mindestens einem Drehgestell gemäß eines der beiden vorher genannten Ansprüche und einem an genanntes Drehgestell angeschlossenem Chassis.

12. Konvoi bestehend aus mindestens einem Zugfahrzeug, mindestens teilweise motorisiert über eine externe und/oder nicht-regenerierbare Energiequelle und eine Anzahl an ziehbaren Fahrzeugen, die an das/die Zugfahrzeug/e oder an eines oder mehrere andere ziehbare Fahrzeuge angeschlossen sind, der genannte Konvoi ist **dadurch gekennzeichnet, dass** mindestens eines der ziehbaren Fahrzeuge von der Art ist, wie in oben genannten Anspruch angegeben.

13. Konvoi gemäß des vorher genannten Anspruchs, in dem das Zugfahrzeug eine Lokomotive und das ziehbare Fahrzeug ein Waggon ist.

14. Konvoi gemäß eines der oben genannten Ansprüche, indem mindestens ein ziehbares Fahrzeug so konfiguriert ist, dass die wiedergewonnene Energie über mindestens eines seiner Drehgestelle, so verwendet wird, um eine ergänzende Zug- oder Bremsfähigkeit für den Konvoi zu liefern.

15. Konvoi gemäß eines der oben genannten Ansprüche 12 oder 13, in dem mindestens eines der ziehbaren Fahrzeuge so konfiguriert ist, dass die wiedergewonnene Energie, über mindestens eines der Drehgestelle, verwendet wird, um eine Zug- oder Bremskapazität während eines beschränkten Zeitraums zu liefern, wie bei einer Verschiebung des ziehbaren Fahrzeugs an einer Rangierstation, wobei dieses nicht gezogen wird.

16. Konvoi gemäß eines der Ansprüche 12 bis 13, in dem mindestens ein ziehbares Fahrzeug so konfiguriert ist, dass die wiedergewonnene Energie, über mindestens eines seiner Drehgestelle, teilweise auf ein anderes ziehbares Fahrzeug des genannten Konvois und/oder an ein Zugfahrzeug übertragen wird.

## Claims

1. A quasi self-contained system for electric energy storage and power supply intended to be installed on a bogie of the type which comprises an axle (5, 7) and a chassis (6) to provide an electric tractive or braking force to the axle comprising:
- 1) at least one energy storage module (1) having the capacity to receive energy, to accumulate it during a non-zero time and to release it on demand in electric form;
- 2) at least one electric converter (2) converting the electric energy supplied/absorbed by the energy storage module (1) with a voltage and a current adapted to the energy supply/recovery from the motor/generator unit (3);
- 3) at least one motor/generator unit (3) transforming the electric energy into mechanical energy and vice versa; and
- 4) one controller (4) which generates the commands and provides the control signals to the various components of the system according to the information received from various sensors and interfaces,
with the energy storage module (1) accumulating or releasing energy to the electric converter (2), with the electric converter (2) transferring such energy between the energy storage module (1) and the motor/generator unit (3), with the motor/generator unit (3) transforming the electric energy received from or supplied to/by the electric converter (2) into mechanical energy and the controller (4) controlling the transfer of energy between the energy storage module (1), electric converter (2) and motor/generator unit (3) elements, **characterized in that**:
. the various sensors comprise:
- one accelerometer (103) making it possible to identify the acceleration of the bogie axle whereon the system has been installed; with the acceleration information thus collected being used by the controller (4) to optimize the transfer of energy during at least one of the traction, braking and headway operations which said system is subjected to;
- one inclinometer (102) making it possible to identify the inclination of the bogie axle whereon the system has been installed; with the information relative to the inclination thus collected being used by the controller (4) to optimize the transfer of energy during at least one of the traction, braking and headway operations which said system is subjected to;
. the controller (4) is so configured as to:
- apply and very gradually increase the tractive force produced by the motor/generator unit (3) if the information relative to the inclination collected by the controller (4) is null or positive when the information relative to the acceleration collected by the controller (4) is positive.

2. A system according to claim 1, additionally comprising at least one speed sensor (101) able to cooperate with at least one rotating shaft of the axle (5, 7), with said speed sensor (101) making it possible to identify the direction and the displacement mode of the axle (5, 7) whereon the system is intended to be installed; with the speed information thus sensed being used by the controller (4) to optimize the transfer of energy between the energy storage module (1) and the motor/generator unit(s) (3) during at least one of the traction, braking and headway operations which said system is subjected to.

3. A system according to the preceding claim, additionally comprising at least one pressure sensor able to cooperate with pneumatic modules of the axle (5, 7) and/or one mechanical sensor and mechanical modules of the axle (5, 7) making it possible to detect the operation, in braking mode, of the axle (5, 7) whereon the system is intended to be installed; with the braking mode information thus sensed being used by the controller (4) to optimize the transfer of energy during at least one of the traction, braking and headway operations which said system is subjected to.

4. A system according to any one of the preceding claims, additionally comprising at least one preferably electric and/or electromagnetic and/or optical connection interface (107), positioned on the controller (4) and enabling the connection and/or communication of the system controller (4) with at least one electric and/or electronic and/or optical device outside said system.

5. A system according to any one of the preceding claims, additionally comprising at least one module providing a connection to an external equipment, positioned on the energy storage module (1), and enabling the bidirectional transfer of energy between one or several equipment outside the system and the energy storage module (1) of said system.

6. A system according to any one of the preceding claims, additionally comprising an electrical resistance, positioned on the energy storage module (1) and/or the electric converter (2) and enabling the dissipation of any energy which might be in excess with respect to the storage capacity of the energy storage module (1) of said system.

7. A system according to any one of the preceding claims, additionally comprising a compressed air auxiliary generator (108), with said additional auxiliary generator (108) being so configured as to:
- transform the energy accumulated by the compressed air system of the axle (5, 7) or of the bogie, whereon said system is installed, into energy storable in the energy storage module (1) of said system; and
- recharge the energy storage module (1) of said system from the compressed air system.

8. A system according to any one of the preceding claims, additionally comprising an auxiliary generator (108) so configured as to:
- transform the kinetic mechanical energy emitted by the longitudinal and/or transverse and/or vertical displacements of the vehicle relative to said system into energy storable in the energy storage module (1) of said system; and
- make it possible to recharge the energy storage module (1) of the system from the mechanical energy generated by such displacements.

9. A bogie of a towable vehicle equipped with at least one system according to any one of the preceding claims, with said bogie having the main function of being a carrier bogie and the secondary function of providing the vehicle it carries with a complementary tractive or braking capacity.

10. A bogie according to the preceding claim, wherein the controller (4) is so configured as to automatically determine the power supply mode among traction, braking and headway on the basis of information from the sensors carried by said bogie only.

11. A quasi self-contained towable vehicle comprising at least one bogie according to one of the preceding two claims and a chassis connected with said bogie.

12. A convoy comprising at least one tractor vehicle at least partially power supplied by an external and/or not regenerative source of energy and a number n of towable vehicles attached to the tractor vehicle(s) or to one or more other towable vehicle(s), with said convoy being **characterized in that** at least one of the towable vehicles is as defined in the preceding claim.

13. A convoy according to the preceding claim, wherein the tractor vehicle is a locomotive and the towable vehicle is a wagon.

14. A convoy according to any one of the two preceding claims, wherein at least one towable vehicle is so configured that the energy recovered by at least one of its bogies is used to provide additional tractive or braking capacity to the convoy.

15. A convoy according to any one of claims 12 or 13, wherein at least one towable vehicle is so configured that the energy recovered by at least one of its bogies is used to provide tractive or braking capacity for a limited period of time such as an operation of moving the towable but not towed vehicle in a marshalling yard.

16. A convoy according to any one of claims 12 to 13, wherein at least one towable vehicle is so configured that the energy recovered by one of its bogies is partially transferred to another towable vehicle of said convoy and/or to the tractor vehicle.
